# EUROPÄISCHE PATENTSCHRIFT

(11) **EP 1 858 719 B1**
(45) Veröffentlichungstag und Bekanntmachung des Hinweises auf die Patenterteilung: **08.05.2013**
(21) Anmeldenummer: 06722616.7
(22) Anmeldetag: 15.03.2006
(51) Int. Cl.: B60J 7/12

(54) **FAHRZEUG MIT EINEM VERDECK UND EINER HECKKLAPPE**
VEHICLE WITH A SOFT TOP AND A REAR FLAP
VEHICULE COMPORTANT UNE CAPOTE ET UNE TRAPPE ARRIERE

(30) Priorität: 15.03.2005 DE 102005012222
(43) Veröffentlichungstag der Anmeldung: 28.11.2007
(73) Patentinhaber: Webasto AG, 82131 Stockdorf (DE)
(72) Erfinder: LEGLER, Dirk, 86947 Weil (DE); BRAUN, Robert, 82335 Berg (DE); DIETL, Rudolf, 81247 München (DE)
(74) Vertreter: Fischer & Konnerth
(86) Internationale Anmeldenummer: PCT/DE2006/000460
(87) Internationale Veröffentlichungsnummer: WO 2006/097082

(56) Entgegenhaltungen:
- EP-A- 0 733 505
- WO-A-2005/007428
- DE-A1- 4 123 283
- DE-C1- 4 441 666

## Beschreibung

Die Erfindung betrifft ein Fahrzeug mit einem Klappverdeck, das zwischen einer Schließstellung und einer Öffnungsstellung verstellbar ist und einen hinteren bewegbaren Verdeckbügel aufweist, und mit einer einen Heckstauraum verschließenden Heckklappe.

Aus der gattungsgemäßen DE 199 27237 C1 ist ein Fahrzeug mit einem zu öffnenden Verdeck und einer Heckklappe bekannt geworden, die an ihrem Unterrand schwenkbar an der Fahrzeugkarosserie angelenkt ist und zum Freigeben einer Hecköffnung nach hinten ausklappbar ist. Ein Heckteil des Verdecks enthält an seiner Unterseite einen Stoffspannbügel, der hochgeschwenkt werden kann, um den Zugang zu einem Heckstauraum bei herabgeklappter Heckklappe zu verbessern (siehe Fig. 6). Aus Sicherheitsgründen muß die herabklappbare Heckklappe eine ausreichende Festigkeit mit einer stabilen Lagerung aufweisen, um Beschädigungen zu verhindern, die bei höherer Belastung der herabgeklappten Heckklappe auftreten könnten.

Der Erfindung liegt die Aufgabe zugrunde, ein eingangs genanntes Fahrzeug im Hinblick auf seine Funktionalität und insbesondere auf die Funktionalität der Heckklappe zu verbessern.

Die Aufgabe wird bei dem oben genannten Fahrzeug erfindungsgemäß dadurch gelöst, daß die Heckklappe am Verdeckbügel schwenkbar gelagert ist. Die Lagerung der Heckklappe an dem Verdeckbügel ermöglicht eine Höhenverstellung der Heckklappe durch das Anheben bzw. Absenken des Verdeckbügels. Damit kann die entriegelte Heckklappe in einer nicht oder auch nur teilweise geöffneten Schwenkstellung mit dem Verdeckbügel angehoben werden, so daß eine heckseitige Öffnung des Heckstauraums zumindest teilweise freigegeben werden kann. Der Verdeckbügel ist allgemein ein rückseitiges Teil des Verdecks, das gegenüber der Karosserie bewegbar gelagert ist und eine Hubbewegung ausführen kann.

Vorteilhafte Ausgestaltungen der Erfindung sind in den abhängigen Ansprüchen angegeben.

Ein besonderer Vorteil der erfindungsgemäßen Lösung ergibt sich dann, wenn die Heckklappe mit dem nach oben schwenkenden Verdeckbügel derart anhebbar ist, daß sie eine nach oben hin vergrößerte Hecköffnung freigibt. Damit kann insbesondere bei vollständig geöffneter bzw. hochgeschwenkter Heckklappe eine wesentlich größere Beladehöhe bereitgestellt werden. Durch das einfache Anheben wird auch ein zusätzlicher Handhabungsaufwand verringert, da eine gemeinsame Hubverstellung ausreichend ist.

Zweckmäßigerweise ist die Heckklappe mittels einer Lagereinrichtung an dem Verdeckbügel schwenkbar gelagert, wobei die Lagereinrichtung beispielsweise zumindest ein Scharnier, ein Mehrgelenk und insbesondere ein Viergelenk enthält. Während die Heckklappe bei einem Scharnier eine reine Schwenkbewegung ausführt, kann bei einem Vier- oder Mehrgelenk das gewünschte Schwenkverhalten weitgehend eingestellt werden. Das Verschwenken der Heckklappe kann manuell, unterstützt durch einen Antrieb oder nur mittels eines Antriebs erfolgen.

Um das Gewicht des Verdeckbügels mit der daran gelagerten Heckklappe auszugleichen, kann der Verdeckbügel mittels einer Gasdruckfeder karosserieseitig abgestützt sein. Damit werden die Verstellkräfte bzw. Hubkräfte reduziert und eine manuelle Bedienung wird unterstützt und erleichtert.

Vorzugsweise ist der Verdeckbügel mittels einer Antriebseinrichtung, insbesondere einem Hydraulikzylinder oder einem motorischen Antrieb, verschwenkbar. Zusätzlich kann auch zumindest eine Gasdruckfeder zur Gewichtsentlastung vorgesehen sein.

Gemäß einer besonders bevorzugten Gestaltung ist der Verdeckbügel ein Stoffspannbügel des einen Verdeckstoff aufweisenden Klappverdecks. Grundsätzlich kann das Verdeck ein einen Verdeckstoff aufweisendes Faltverdeck oder auch ein Hardtop-Klappverdeck mit festschaligen Dachelementen sein. Der Verdeckbügel ist bei einem Hardtop-Klappverdeck ein Abschnitt eines hinteren Verdeckteils oder ein eigenständiges bewegbares Lagerteil für die Heckklappe.

Zum Verriegeln der Heckklappe und des Verdeckbügels bzw. Stoffspannbügels in Schließstellung kann vorgesehen sein, daß eine die Heckklappe mit der Karosserie verbindende Zugeinrichtung bei geschlossener Heckklappe aktiv ist und den Verdeckbügel bzw. Stoffspannbügel in Schließstellung hält. Diese Zugeinrichtung kann durch die Schließbewegung der Heckklappe und des Verdeckbügels bzw. Stoffspannbügels insbesondere mechanisch zwangsgesteuert sein. So kann beim Hochschwenken der Heckklappe die Zugeinrichtung inaktiv werden bzw. sein und beim Herabschwenken wieder aktiviert werden.

Eine bevorzugte Gestaltung sieht vor, daß die Zugeinrichtung ein Zug- oder Spannseil enthält, das an einem mit der Heckklappe fest verbundenen Schwenkarm befestigt ist, und daß der Schwenkarm derart an der Heckklappe angeordnet ist, daß das Spannseil beim Hochschwenken der Heckklappe aus seiner gespannten Aktivstellung entspannt wird und das Hochschwenken des Verdeckbügels bzw. Stoffspannbügels zuläßt. Das Spannseil kann mittels einer Spannfeder an der Karosserie befestigt sein, so daß die Schließkraft elastisch aufgebracht wird, oder das Spannseil weist selbst eine ausreichende Elastizität auf.

Weiterhin kann vorgesehen sein, daß ein der Schwenklagerung der Heckklappe benachbartes Riegelteil der Heckklappe beim Verschwenken der Heckklappe in ihre Schließstellung mit einem karosserieseitigen Halteteil in Riegeleingriff kommt. Auch diese Lösung stellt eine zuverlässige Verriegelung der Heckklappe und des Verdeckbügels bzw. Stoffspannbügels bereit.

Zweckmäßigerweise ist dem Heckklappenschloß eine Zuziehhilfe zugeordnet, die das Schließen der Heckklappe unterstützt und erleichtert sowie diesen Vorgang betriebssicher macht. Der aktive Teil der Zuziehhilfe kann an der Karosserie oder an der Heckklappe und insbesondere am Heckklappenschloß angebracht sein.

Weiterhin kann eine Verriegelung des Verdeckbügels bzw. Stoffspannbügels in Schließstellung über die genannte oder eine weitere Zuziehhilfe erfolgen, die insbesondere einen vergrößerten Zuziehweg aufweist. Diese Verriegelung mittels Zuziehhilfe kann die alleinige Verriegelung oder eine ergänzende Verriegelung darstellen. Andererseits kann der Verdeckbügel bzw. Stoffspannbügel auch mittels zumindest eines Schlosses karosserieseitig verriegelbar sein. So kann ein Riegel des Schlosses beim Absenken des Verdeck- bzw. Stoffspannbügels in seine Schließstellung an einem Riegelgegenstück des Verdeck- bzw. Stoffspannbügels automatisch in Eingriff kommen und durch eine Betätigungseinrichtung wieder zu entriegeln sein. Die Betätigungseinrichtung ist zweckmäßigerweise mit der Antriebseinrichtung des Verdeck- bzw. Stoffspannbügels gekoppelt.

Die Heckklappe kann in Leichtbauweise hergestellt sein, z. B. mittels LFI (long fiber injection), PHC (paper honey comb), WHC (Webasto honey comb), SMC (sheet moulding compound) oder LFT (long fiber thermoplast). Durch das geringere Gewicht der Struktur werden die zu bewegenden Momente beim Verschwenken und bei Hubbewegungen reduziert.

Die Heckklappe kann derart gebildet sein, daß sie in Schließstellung im wesentlichen in aufrechter Stellung angeordnet ist und die rückseitige Hecköffnung verschließt. Jedoch ist die Heckklappe nicht auf diese Form beschränkt. So kann sie auch einen sich horizontal erstreckenden Anteil aufweisen. Das Fahrzeug ist zweckmäßigerweise ein Fließheckcabriolet und die Heckklappe grenzt unmittelbar an den Verdeckbügel bzw. Stoffspannbügel an.

Nachfolgend wird das Fahrzeug anhand eines Ausführungsbeispiels unter Bezugnahme auf die Zeichnung näher erläutert. Es zeigt:
- Fig. 1: in einer Seitenansicht in schematischer Darstellung einen Heckbereich eines Fahrzeugs mit einem zu öffnenden Verdeck und einer in Schließstellung angeordneten Heckklappe, die an einem Stoffspannbügel schwenkbar gelagert ist;
- Fig. 2: in einer Ansicht gemäß Fig. 1 den Heckbereich des Fahrzeugs mit hochgeschwenkter Heckklappe;
- Fig. 3: in einer Ansicht gemäß Fig. 1 den Heckbereich des Fahrzeugs mit hochgeschwenkter Heckklappe, die zusätzlich mittels des hochgeschwenkten Stoffspannbügels angehoben ist; und
- Fig. 4: in einer Ansicht gemäß Fig. 1 den Heckbereich des Fahrzeugs mit geschlossener Heckklappe und einer alternativen Verriegelung des Stoffspannbügels.

Ein Fahrzeug 1, beispielsweise ein Fließheckcabriolet, enthält ein Klapp- oder Faltverdeck 2, das in an sich bekannter Weise zwischen einer Schließstellung über einem Fahrgastraum und einer Offenstellung, in der es heckseitig zusammengefaltet abgelegt ist, verstellbar ist. Ein Verdeckstoff 3 des Faltverdecks 2 enthält im Heckbereich ein Heckfenster 4 und ist über zumindest einen Spriegel 5 eines Verdeckgestänges sowie einen einen Abschluß des Faltverdecks 2 bildenden heckseitigen Stoffspannbügel 6 in seiner gespannten Schließstellung gehalten. Der im wesentlichen U-förmige Stoffspannbügel 6 ist um eine karosserieseitige Schwenkachse 7, die von beidseits karosseriefest angeordneten Schwenklagern gebildet ist, schwenkbar gelagert. Ein derartiger Stoffspannbügel ist z. B. aus der DE 41 23 283 A1, der DE 44 41 666 C1 oder der EP 0 749 859 B1 bekannt.

Eine Heckklappe 8 des Fahrzeugs 1 ist mittels einer Lagereinrichtung 9 an dem Stoffspannbügel 6 schwenkbar gelagert. Die Lagereinrichtung 9 ist z. B. als Viergelenk mit einem oberen Lenker 10 und einem unteren Lenker 11 gebildet, die an einem rückwärtigen Abschnitt des Stoffspannbügels 6 oder an einem daran befestigen Trägerteil 12 in Schwenkachsen 13 bzw. 14 und an der Heckklappe 8 in Schwenkachsen 15 bzw. 16 angelenkt sind. Die Lagereinrichtung 9 enthält zwei in Querrichtung voneinander beabstandete Viergelenke (von denen nur eines in den Figuren dargestellt ist), kann aber auch nur ein zentrales Viergelenk enthalten.

Zum Verriegeln der Heckklappe 8 ist an ihrem Unterrand 17 ein Heckklappenschloß 18 vorgesehen, wobei entweder das Schloß an der Karosserie und ein Riegel an der Heckklappe 8 oder das Schloß an der Heckklappe 8 und der Riegel an der Karosserie angeordnet ist. Eine Zuziehhilfe 19 für die Heckklappe 8 ist gleichfalls entweder an der Karosserie oder an der Heckklappe 8 angeordnet.

Der Stoffspannbügel 6 ist mittels einer Schwenkeinrichtung 20 verschwenkbar, die sich karosserieseitig abstützt und die z. B. einen Hydraulikzylinder oder einen motorischen Direktantrieb enthält. Die Schwenkeinrichtung 20 kann auch eine Gasdruckfeder sein oder diese zusätzlich enthalten, so daß das Gewicht des Stoffspannbügels 6 mit der daran gelagerten Heckklappe 8 abgestützt und ausgeglichen wird. Damit ist auch ein manuelles Betätigen oder Verschwenken des Stoffspannbügels 6 leicht möglich.

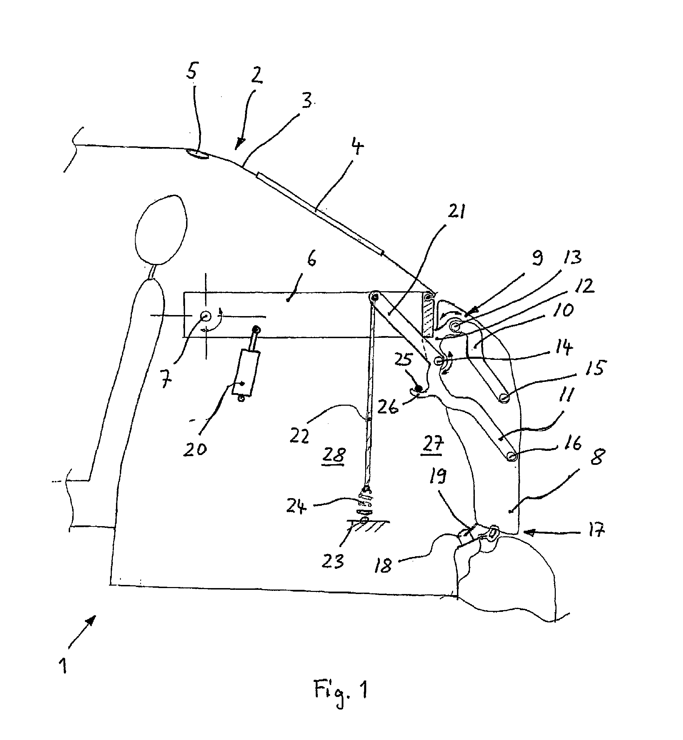

Die Heckklappe 8 weist einen Schwenkarm 21 auf, der von der Lagereinrichtung 9 aus nach vorne ragt, bei geschlossener Heckklappe 8 z. B. schräg aufwärts (siehe Fig. 1). Am Vorderende der Schwenkarms 21 ist ein Zugseil 22 befestigt, das an seinem gegenüberliegenden Ende an einem Karosserieteil 23 befestigt ist, beispielsweise unter Zwischenschaltung einer Zugfeder 24. Der Schwenkarm 21 kann als Verlängerung des unteren Lenkers 11 des Viergelenks gebildet sein, die sich über die Schwenkachse 14 nach vorne hinaus erstreckt.

Eine zusätzliche Verriegelung kann von einem karosserieseitig befestigten Bolzen 25 bereitgestellt werden, der beim verschwenkenden Schließen der Heckklappe 8 von einem Riegelfinger 26 umgriffen wird, der z. B. am unteren Lenker 11 angeordnet ist.

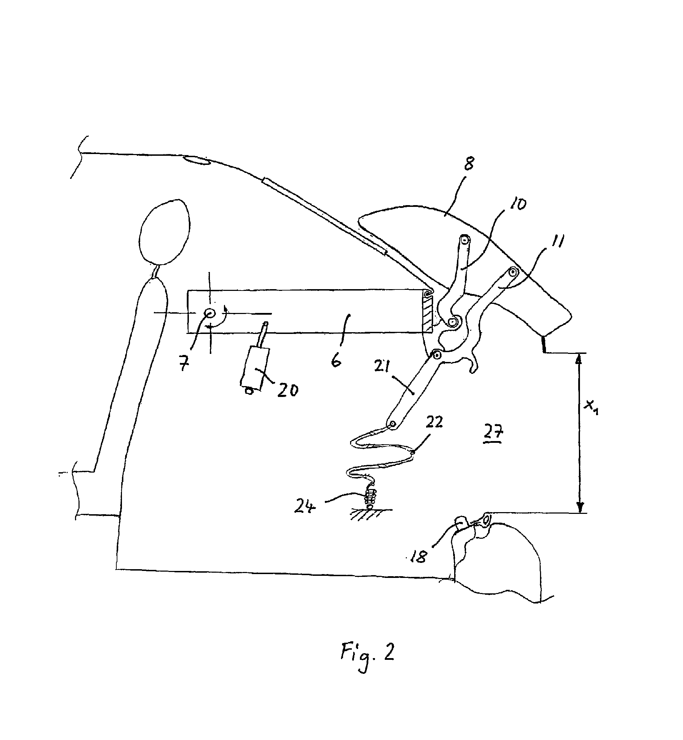

Zum Freigeben einer heckseitigen Beladeöffnung 27 eines Heckstauraums 28 wird die Heckklappe 8 nach dem Entriegeln des Heckklappenschlosses 18 aus ihrer Schließstellung nach oben geschwenkt (Bewegung von Fig. 1 nach Fig. 2). Dabei kommt der Riegelfinger 26 außer Eingriff vom Bolzen 25 und das Zugseil 22 wird entspannt. Die hierdurch maximal einstellbare Höhe der Beladeöffnung ist in Fig. 2 durch "x₁" dargestellt.

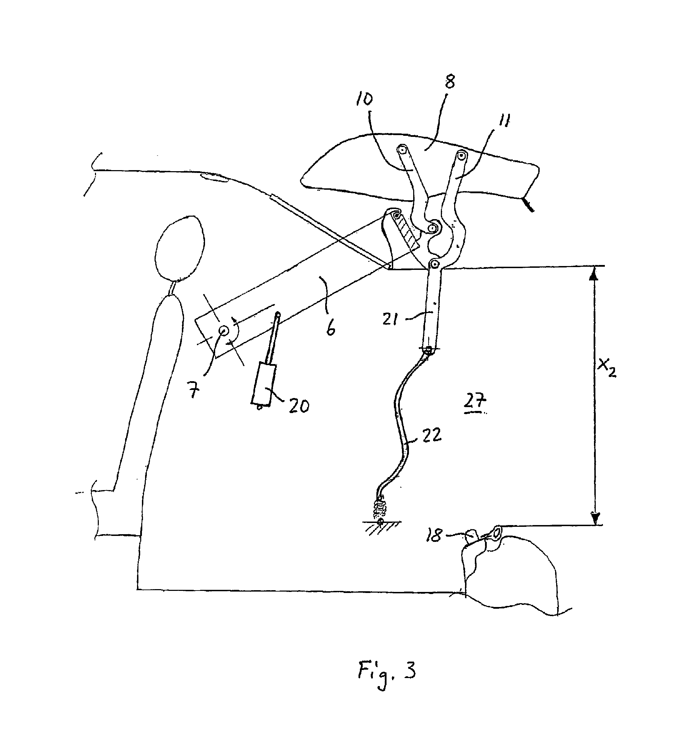

Die Heckklappe 8 kann aus der in Fig. 2 dargestellten Stellung gemeinsam mit dem Stoffspannbügel 6 bzw. mittels des Stoffspannbügels 6 angehoben bzw. um die Schwenkachse 7 hochgeschwenkt werden. In der in Fig. 3 dargestellten oberen Endstellung ist die einstellbare Höhe der Beladeöffnung vergrößert (durch "x₂" dargestellt).

Beim Schließen der Heckklappe 8 (Bewegung von Fig. 3 nach Fig. 1) wird während der letzten Schließbewegung der Heckklappe 8 in das Heckklappenschloß 18, die von der Zuziehhilfe 19 ausgeführt werden kann, das Zugseil 22 wieder gespannt, so daß in der Endstellung gemäß Fig. 1 der Stoffspannbügel 6 in seiner unteren Stellung verriegelt gehalten ist. Dadurch wird auch erreicht, daß beim Schließen der Heckklappe 8 immer der Einlauf in des Heckklappenschloß 18 gewährleistet ist. Die Verriegelung mittels des Bolzens 25 ist alternativ oder ergänzend zur Verriegelung mit dem Zugseil 22 möglich.

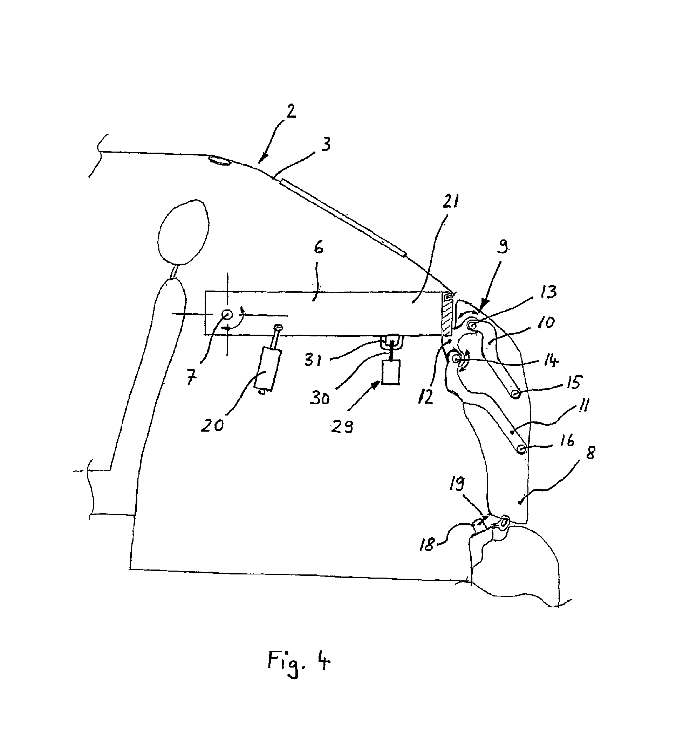

Bei der alternativen Gestaltung gemäß Fig. 4 wird der Stoffspannbügel 6 durch die Schwenkeinrichtung 20 in seine Schließstellung bewegt und dabei mittels eines jeweiligen linken bzw. rechten seitlichen Schlosses 29 verriegelt, dessen Riegelhaken 30 einen Bügel 31 des Stoffspannbügels 6 verriegelt hält. Die Entriegelung des Schlosses 29 erfolgt z. B. beim Betätigen der Schwenkeinrichtung 20 über eine entsprechende gekoppelte Betätigungseinrichtung.

Des weiteren kann die Verriegelung des Stoffspannbügels 6 anstatt mittels des Zugseils 22, des Bolzens 25 oder des Schlosses 29 oder einer ähnlichen Riegeleinrichtung auch durch eine Zuziehhilfe erfolgen, die z. B. am Heckklappenschloß 18 angeordnet ist und einen größeren Zuziehweg von mehreren Zentimetern aufweist. Beim Schließen der Heckklappe 8 wird dann über die Zuziehhilfe auch der Stoffspannbügel 6 in seine verriegelte Stellung gebracht und darin durch das Heckklappenschloß 18 gehalten.

Die Heckklappe kann in Leichtbauweise hergestellt sein, z. B. mittels LFI, PHC, WHC, SMC oder LFT, so daß durch das geringere Gewicht der Struktur die zu bewegenden Momente beim Verschwenken und bei Hubbewegungen reduziert werden. Beispiele für mittels Leichtbauweise hergestellter Fahrzeugteile sind in der EP 0 995 667 A1, der DE 29 34 430 A1 und der DE 100 33 2332 C2 enthalten. Die offenbarten Leichtbauweisen eignen sich auch für die vorliegende Heckklappe 8.

### Bezugszeichenliste

| | |
|---|---|
| 1 | Fahrzeug |
| 2 | Faltverdeck |
| 3 | Verdeckstoff |
| 4 | Heckfenster |
| 5 | Spriegel |
| 6 | Stoffspannbügel |
| 7 | Schwenkachse |
| 8 | Heckklappe |
| 9 | Lagereinrichtung |
| 10 | oberer Lenker |
| 11 | unterer Lenker |
| 12 | Trägerteil |
| 13 | Schwenkachse |
| 14 | Schwenkachse |
| 15 | Schwenkachse |
| 16 | Schwenkachse |
| 17 | Unterrand |
| 18 | Heckklappenschloß |
| 19 | Zuziehhilfe |
| 20 | Schwenkeinrichtung |
| 21 | Schwenkarm |
| 22 | Zugseil |
| 23 | Karosserieteil |
| 24 | Zugfeder |
| 25 | Bolzen |
| 26 | Riegelfinger |
| 27 | Beladeöffnung |
| 28 | Heckstauraum |
| 29 | Schloß |
| 30 | Riegelhaken |
| 31 | Bügel |

## Patentansprüche

1. Fahrzeug mit einem Klappverdeck, das zwischen einer Schließstellung und einer Öffnungsstellung verstellbar ist und einen hinteren bewegbaren Verdeckbügel (6) aufweist, und mit einer einen Heckstauraum verschließenden Heckklappe (8),
**dadurch gekennzeichnet,**
**daß** die Heckklappe (8) am Verdeckbügel (6) schwenkbar gelagert ist.

2. Fahrzeug nach Anspruch 1,
**dadurch gekennzeichnet, daß** zum Freigeben einer vergrößerten Hecköffnung (27) die Heckklappe (8) mit dem nach oben schwenkenden Verdeckbügel (6) anhebbar ist.

3. Fahrzeug nach Anspruch 1 oder 2,
**dadurch gekennzeichnet, daß** die Heckklappe (8) mittels einer Lagereinrichtung (9) an dem Verdeckbügel (6) schwenkbar gelagert ist und die Lagereinrichtung (9) ein Scharnier, ein Mehrgelenk und insbesondere ein Viergelenk enthält.

4. Fahrzeug nach einem der Ansprüche 1 bis 3,
**dadurch gekennzeichnet, daß** der Verdeckbügel (6) mittels einer Gasdruckfeder karosserieseitig abgestützt ist.

5. Fahrzeug nach einem der Ansprüche 1 bis 4,
**dadurch gekennzeichnet, daß** der Verdeckbügel (6) mittels einer Antriebseinrichtung (20), insbesondere einem Hydraulikzylinder oder einem motorischen Antrieb, verschwenkbar ist.

6. Fahrzeug nach einem der Ansprüche 1 bis 5,
**dadurch gekennzeichnet, daß** der Verdeckbügel ein Stoffspannbügel (6) des einen Verdeckstoff aufweisenden Klappverdecks (2) ist.

7. Fahrzeug nach einem der Ansprüche 1 bis 6,
**dadurch gekennzeichnet, daß** eine die Heckklappe (8) mit der Karosserie verbindende Zugeinrichtung (22) bei geschlossener Heckklappe (8) aktiv ist und den Verdeckbügel bzw. Stoffspannbügel (6) in Schließstellung hält.

8. Fahrzeug nach Anspruch 7,
**dadurch gekennzeichnet, daß** beim Hochschwenken der Heckklappe (8) die Zugeinrichtung (22) inaktiv ist.

9. Fahrzeug nach Anspruch 7 oder 8,
**dadurch gekennzeichnet, daß** die Zugeinrichtung ein Spannseil (22) enthält, das an einem mit der Heckklappe (8) fest verbundenen Schwenkarm (21) befestigt ist, und daß der Schwenkarm (21) derart an der Heckklappe (8) angeordnet ist, daß das Spannseil (22) beim Hochschwenken der Heckklappe (8) aus seiner gespannten Aktivstellung entspannt wird und das Hochschwenken des Verdeckbügels bzw. Stoffspannbügels (6) zuläßt.

10. Fahrzeug nach Anspruch 9,
**dadurch gekennzeichnet, daß** das Spannseil (22) mittels einer Spannfeder (24) an der Karosserie befestigt ist.

11. Fahrzeug nach einem der Ansprüche 1 bis 10,
**dadurch gekennzeichnet, daß** ein der Schwenklagerung (9) der Heckklappe (8) benachbartes Riegelteil (26) der Heckklappe (8) beim Verschwenken der Heckklappe (8) in ihre Schließstellung mit einem karosserieseitigen Halteteil (25) in Riegeleingriff kommt.

12. Fahrzeug nach einem der Ansprüche 1 bis 11,
**dadurch gekennzeichnet, daß** einem Heckklappenschloß (18) eine Zuziehhilfe (19) zugeordnet ist.

13. Fahrzeug nach einem der Ansprüche 1 bis 12,
**dadurch gekennzeichnet, daß** eine Verriegelung des Verdeckbügels bzw. Stoffspannbügels (6) in Schließstellung über die Zuziehhilfe (19) erfolgt, die insbesondere einen vergrößerten Zuziehweg aufweist.

14. Fahrzeug nach einem der Ansprüche 1 bis 13,
**dadurch gekennzeichnet, daß** der Verdeckbügel bzw. Stoffspannbügel (6) mittels zumindest eines Schlosses (29) karosserieseitig verriegelbar ist.

15. Fahrzeug nach einem der Ansprüche 1 bis 14,
**dadurch gekennzeichnet, daß** die Heckklappe (8) in im wesentlichen aufrechter Schließstellung die rückseitige Hecköffnung (27) verschließt.

16. Fahrzeug nach einem der Ansprüche 1 bis 15,
**dadurch gekennzeichnet, daß** die Heckklappe (8) in Leichtbauweise hergestellt ist.

17. Fahrzeug nach einem der Ansprüche 1 bis 16,
**dadurch gekennzeichnet, daß** das Fahrzeug ein Fließheckcabrio ist und die Heckklappe (8) unmittelbar an den Verdeckbügel bzw. Stoffspannbügel (6) angrenzt.

## Claims

1. Vehicle with a folding top which is displaceable between a closed position and an open position and has a rear movable folding-top bow (6), and with a rear flap (8) closing a rear storage compartment, **characterized in that** the rear flap (8) is mounted pivotably on the folding-top bow (6).

2. Vehicle according to Claim 1, **characterized in that**, in order to open up an enlarged rear opening (27), the rear flap (8) is raisable by the folding-top bow (6) pivoting upwards.

3. Vehicle according to Claim 1 or 2, **characterized in that** the rear flap (8) is mounted pivotably on the folding-top bow (6) by means of a bearing device (9) and the bearing device (9) contains a hinge, a multi-bar linkage and in particular a four-bar linkage.

4. Vehicle according to one of Claims 1 to 3, **characterized in that** the folding-top bow (6) is supported on the vehicle-body side by means of a gas pressure spring.

5. Vehicle according to one of Claims 1 to 4, **characterized in that** the folding-top bow (6) is pivotable by means of a driving device (20), in particular a hydraulic cylinder or a motorized drive.

6. Vehicle according to one of Claims 1 to 5, **characterized in that** the folding-top bow is a fabric-tensioning bow (6) of the folding top (2) having a folding-top fabric.

7. Vehicle according to one of Claims 1 to 6, **characterized in that** a tension device (22) connecting the rear flap (8) to the vehicle body is active when the rear flap (8) is closed and keeps the folding-top bow or fabric-tensioning bow (6) in the closed position.

8. Vehicle according to Claim 7, **characterized in that**, when the rear flap (8) is pivoted upwards, the tension device (22) is inactive.

9. Vehicle according to Claim 7 or 8, **characterized in that** the tension device contains a tensioning cable (22) which is fastened to a pivot arm (21), which is fixedly connected to the rear flap (8), and **in that** the pivot arm (21) is arranged on the rear flap (8) in such a manner that, when the rear flap (8) is pivoted upwards, the tensioning cable (22) is relaxed from the tensioned active position thereof and permits the folding-top bow or fabric-tensioning bow (6) to pivot upwards.

10. Vehicle according to Claim 9, **characterized in that** the tensioning cable (22) is fastened to the vehicle body by means of a tensioning spring (24).

11. Vehicle according to one of Claims 1 to 10, **characterized in that**, when the rear flap (8) is pivoted into the closed position thereof, a locking part (26) of the rear flap (8), which locking part is adjacent to the pivot mounting (9) of the rear flap (8), comes into locking engagement with a retaining part (25) on the vehicle-body side.

12. Vehicle according to one of Claims 1 to 11, **characterized in that** a rear flap lock (18) is assigned a pulling-shut aid (19).

13. Vehicle according to one of Claims 1 to 12, **characterized in that** the folding-top bow or fabric-tensioning bow (6) is locked in the closed position via the pulling-shut aid (19) which in particular has an enlarged pulling-shut path.

14. Vehicle according to one of Claims 1 to 13, **characterized in that** the folding-top bow or fabric-tensioning bow (6) is lockable on the vehicle-body side by means of at least one lock (29).

15. Vehicle according to one of Claims 1 to 14, **characterized in that** the rear flap (8), in a substantially upright closed position, closes the rear opening (27) at the rear end.

16. Vehicle according to one of Claims 1 to 15, **characterized in that** the rear flap (8) is produced in a lightweight construction.

17. Vehicle according to one of Claims 1 to 16, **characterized in that** the vehicle is a fastback convertible and the rear flap (8) is directly adjacent to the folding-top bow or fabric-tensioning bow (6).

## Revendications

1. Véhicule comprenant une capote pliante qui peut être déplacée entre une position de fermeture et une position d'ouverture et qui présente un arceau de capote (6) arrière déplaçable, et comprenant une trappe arrière (8) fermant un espace de rangement arrière,
**caractérisé en ce que**
la trappe arrière (8) est montée de manière pivotante sur l'arceau de capote (6).

2. Véhicule selon la revendication 1,
**caractérisé en ce que** pour libérer une ouverture arrière (27) plus grande, la trappe arrière (8) peut être soulevée avec l'arceau de capote (6) pivotant vers le haut.

3. Véhicule selon la revendication 1 ou 2, **caractérisé en ce que** la trappe arrière (8) est montée de manière pivotante sur l'arceau de capote (6) au moyen d'un dispositif de support (9), et le dispositif de support (9) contient une charnière, une articulation multiple, et notamment un quadrilatère articulé.

4. Véhicule selon l'une quelconque des revendications 1 à 3, **caractérisé en ce que** l'arceau de capote (6) est supporté au moyen d'un ressort de pression à gaz du côté de la carrosserie.

5. Véhicule selon l'une quelconque des revendications 1 à 4,
**caractérisé en ce que** l'arceau de capote (6) peut pivoter au moyen d'un dispositif d'entraînement (20), notamment d'un cylindre hydraulique ou d'un entraînement à moteur.

6. Véhicule selon l'une quelconque des revendications 1 à 5,
**caractérisé en ce que** l'arceau de capote est un arceau tendeur de toile (6) de la capote pliante (2) présentant une toile de capote.

7. Véhicule selon l'une quelconque des revendications 1 à 6,
**caractérisé en ce qu'**un dispositif de traction (22) reliant la trappe arrière (8) à la carrosserie est actif lorsque la trappe arrière (8) est fermée et maintient l'arceau de capote ou l'arceau tendeur de toile (6) dans la position de fermeture.

8. Véhicule selon la revendication 7,
**caractérisé en ce que** dans le cas d'un pivotement vers le haut de la trappe arrière (8), le dispositif de traction (22) est inactif.

9. Véhicule selon la revendication 7 ou 8, **caractérisé en ce que** le dispositif de traction contient un câble tendeur (22) qui est fixé à un bras pivotant (21) connecté fixement à la trappe arrière (8), et **en ce que** le bras pivotant (21) est disposé sur la trappe arrière (8) de telle sorte que le câble tendeur (22), lors du pivotement vers le haut de la trappe arrière (8), soit relâché de sa position active tendue et permette le pivotement vers le haut de l'arceau de capote ou de l'arceau tendeur de toile (6).

10. Véhicule selon la revendication 9,
**caractérisé en ce que** le câble tendeur (22) est fixé à la carrosserie au moyen d'un ressort tendeur (24).

11. Véhicule selon l'une quelconque des revendications 1 à 10,
**caractérisé en ce qu'**une partie de verrou (26) de la trappe arrière (8) adjacente au support pivotant (9) de la trappe arrière (8) vient en prise de verrouillage lors du pivotement de la trappe arrière (8) dans sa position de fermeture avec une partie de retenue (25) du côté de la carrosserie.

12. Véhicule selon l'une quelconque des revendications 1 à 11,
**caractérisé en ce qu'**un auxiliaire de fermeture (19) est associé à une serrure de trappe arrière (18).

13. Véhicule selon l'une quelconque des revendications 1 à 12,
**caractérisé en ce qu'**un verrouillage de l'arceau de capote ou de l'arceau tendeur de toile (6) dans la position de fermeture a lieu par le biais de l'auxiliaire de fermeture (19), qui présente notamment une course de fermeture agrandie.

14. Véhicule selon l'une quelconque des revendications 1 à 13,
**caractérisé en ce que** l'arceau de capote ou l'arceau tendeur de toile (6) peut être verrouillé du côté de la carrosserie au moyen d'au moins une serrure (29).

15. Véhicule selon l'une quelconque des revendications 1 à 14,
**caractérisé en ce que** la trappe arrière (8) ferme l'ouverture arrière (27) du côté arrière dans la position de fermeture essentiellement redressée.

16. Véhicule selon l'une quelconque des revendications 1 à 15,
**caractérisé en ce que** la trappe arrière (8) est fabriquée avec une construction légère.

17. Véhicule selon l'une quelconque des revendications 1 à 16,
**caractérisé en ce que** le véhicule est un cabriolet à hayon arrière et la trappe arrière (8) est directement adjacente à l'arceau de capote ou à l'arceau tendeur de toile (6).
